(19) Europäisches Patentamt
European Patent Office
Office européen des brevets

(11) **EP 4 435 878 A1**

(12) **EUROPEAN PATENT APPLICATION**
published in accordance with Art. 153(4) EPC

(43) Date of publication:
**25.09.2024 Bulletin 2024/39**

(21) Application number: **23866611.9**

(22) Date of filing: **25.08.2023**

(51) International Patent Classification (IPC):
*H01M 4/04* (2006.01)     *H01M 4/13* (2010.01)
*H01M 4/36* (2006.01)     *H01M 4/62* (2006.01)
*H01M 10/0525* (2010.01)  *H01M 10/42* (2006.01)

(52) Cooperative Patent Classification (CPC):
Y02E 60/10

(86) International application number:
**PCT/CN2023/115022**

(87) International publication number:
**WO 2024/164519 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.02.2023   CN 202310093288**

(71) Applicant: **Sunwoda Mobility Energy Technology
Co., Ltd.
Shenzhen, Guangdong 518107 (CN)**

(72) Inventors:
• HE, Caiyun
  Shenzhen, Guangdong 518107 (CN)
• CHEN, Wei
  Shenzhen, Guangdong 518107 (CN)
• OUYANG, Yunpeng
  Shenzhen, Guangdong 518107 (CN)
• CHU, Chunbo
  Shenzhen, Guangdong 518107 (CN)
• ZHANG, Yao
  Shenzhen, Guangdong 518107 (CN)

(74) Representative: **Groth & Co. KB
P.O. Box 6107
102 32 Stockholm (SE)**

(54) **LITHIUM-ION BATTERY AND ELECTRIC APPARATUS**

(57)    The present application provides a lithium-ion battery and an electrical device. In a lithium-ion battery, the lithium ion migration kinetic coefficient $F_c$ of the positive electrode coating and the lithium ion migration kinetic coefficient $F_a$ of the negative electrode coating satisfy: $0.25 \leq F_c/F_a \leq 5$; $F_c=2(Dv_c50+5M_c)+PD_c/4P_c$, $F_a=Dv_a50+M_a+PD_a/2P_a$, $Dv_c50$ is an average particle size of a positive active material in the positive electrode coating; $M_c$ is an internal resistance of the positive electrode plate; $PD_c$ is a compaction density of the positive electrode coating; $P_c$ is a porosity of the positive electrode coating; $Dv_a50$ is an average particle size of a negative active material in the negative electrode coating; $M_a$ is an internal resistance of the negative electrode plate; $PD_a$ is a compaction density of the negative electrode coating; $P_a$ is a porosity of the negative electrode coating. A relative balance can be achieved between a rate of deintercalation of lithium ions from the positive electrode coating and a rate of intercalation of lithium ions into the negative electrode coating in the aforementioned lithium-ion battery, thereby ensuring the charging capacity of the lithium-ion battery.

EP 4 435 878 A1

**Description**

**CROSS REFERENCE TO RELATED APPLICATIONS**

The present application claims priority to Chinese Patent Application No. 202310093288.0, entitled "LITHIUM-ION BATTERY AND ELECTRICAL DEVICE", and filed to the China National Intellectual Property Administration on February 10, 2023, the entire contents of which are incorporated herein by reference.

**TECHNICAL FIELD**

The present application relates to the field of lithium-ion batteries, and in particular relates to a lithium-ion battery and an electrical device.

**BACKGROUND**

In recent years, with the development of new energy vehicles, lithium-ion batteries have been widely used due to their advantages such as high voltage, high energy density, long cycle life, low self-discharge, and non-pollution. Lithium-ion batteries are the power source of new energy vehicles, and their properties of charging speed, cycle life, and safety are crucial for lithium-ion batteries. The lithium-ion battery includes a positive electrode plate and a negative electrode plate relatively arranged, a separator separating the positive electrode plate and the negative electrode plate, and an electrolyte between the positive electrode plate and the negative electrode plate. The positive electrode plate includes a positive current collector and a positive electrode coating arranged on at least one surface of the positive current collector, and the negative electrode plate includes a negative current collector and a negative electrode coating arranged on at least one surface of the negative current collector. When a lithium-ion battery is charged, lithium-ions are deintercalated from the positive electrode active material, migrated to the negative electrode plate through the electrolyte under the action of an electric field, and are intercalated in the negative electrode active material.
The imbalance between a rate of deintercalation of lithium ions from the positive electrode active material and a rate of intercalation of lithium ions into the negative electrode active material limits the charging capacity of lithium-ion batteries.

**SUMMARY**

Therefore, the present application provides a lithium-ion battery and an electrical device to solve the technical problem of how to improve the charging capacity of the lithium-ion battery.
The first aspect of the present application provides a lithium-ion battery, including a positive electrode plate and a negative electrode plate. The positive electrode plate includes a positive current collector and a positive electrode coating arranged on at least one surface of the positive current collector. The negative electrode plate includes a negative current collector and a negative electrode coating arranged on at least one surface of the negative current collector. A lithium ion migration kinetic coefficient $F_c$ of the positive electrode coating and A lithium ion migration kinetic coefficient $F_a$ of the negative electrode coating satisfy: $0.25 \leq F_c/F_a \leq 5$; $F_c = 2(Dv_c50 + 5M_c) + PD_c/4P_c$, where $Dv_c50$ μm is an average particle size of a positive active material in the positive electrode coating; $M_c$ Q is the internal resistance of the positive electrode plate; $PD_c$ g/cm$^3$ is a compaction density of the positive electrode coating; $P_c$ is a porosity of the positive electrode coating; $F_a = Dv_a50 + M_a + PD_a/2P_a$, where $Dv_a50$ μm is an average particle size of a negative active material in the negative electrode coating; $M_a$ mΩ is an internal resistance of the negative electrode plate; $PD_a$ g/cm$^3$ is a compaction density of the negative electrode coating; Pa is a porosity of the negative electrode coating.
Optionally, the lithium ion migration kinetic coefficient $F_c$ of the positive electrode coating and the lithium ion migration kinetic coefficient $F_a$ of the negative electrode coating satisfy: $0.25 \leq F_c/F_a \leq 2.8$.
Optionally, the lithium ion migration kinetic coefficient $F_c$ of the positive electrode coating is in a range from 6 to 33, and the lithium ion migration kinetic coefficient $F_a$ of the negative electrode coating is in a range from 7 to 40.
Optionally, the lithium ion migration kinetic coefficient $F_c$ of the positive electrode coating is in a range from 8 to 22, and the lithium ion migration kinetic coefficient $F_a$ of the negative electrode coating is in a range from 10 to 28.
Optionally, the average particle size of the positive electrode active material is in a range from 2 μm to 8 μm, the internal resistance of the positive electrode plate is in a range from 0.05Q to 1.6Ω, the compaction density of the positive electrode coating is in a range from 3.0g/cm$^3$ to 3.8g/cm$^3$, and the porosity of the positive electrode coating is in a range from 20% to 50%; and the average particle size of the negative active material is in a range from 6 μm to 20 μm, the internal resistance of the negative electrode plate is in a range from 0.8mS2 to 15mΩ, the compaction density of the negative electrode coating is in a range from 1.4g/cm$^3$ to 1.8g/cm$^3$, and the porosity of the negative electrode coating is in a range from 20% to 60%.

Optionally, the average particle size of the positive electrode active material is in a range from 2.53 $\mu$m to 7.56 $\mu$m, the internal resistance of the positive electrode plate is in a range from 0.05 Q to 0.9 Q, the compaction density of the positive electrode coating is in a range from 3.1g/cm$^3$ to 3.6g/cm$^3$, and the porosity of the positive electrode coating is in a range from 20% to 40%; and the average particle size of the negative active material is 8 $\mu$m to 18 $\mu$m, the internal resistance of the negative electrode plate is in a range from 0.8m$\Omega$ to 10m$\Omega$, the compaction density of the negative electrode coating is in a range from 1.4g/cm$^3$ to 1.7g/cm$^3$, and the porosity of the negative electrode coating is in a range from 35% to 55%.

Optionally, at least some of the positive electrode active materials are single crystal particles.

Optionally, the positive electrode active material includes a modified positive electrode active material.

Optionally, the modified positive electrode active material includes a doping element, and the doping element includes at least one of Al, Zr, Sr, Ti, B, Mg, V, Ba, W, Y and Nb.

Optionally, the modified positive electrode active material includes a coating agent, and the constituent elements of the coating agent include at least one of Li, Al, Ti, Mn, Zr, Mg, Zn, Ba, Mo, B, Wand Co.

Optionally, the coating agent includes metal oxides and/or inorganic salts, wherein the metal oxide includes an oxide formed from at least one of Al, Ti, Mn, Zr, Mg, Zn, Ba, Mo, B, W and Co, and the inorganic salt includes at least one of $Li_2ZrO_3$, $LiNbO_3$, $Li_4Ti_5O_{12}$, $Li_2TiO_3$, $LiTiO_2$, $Li_3VO_4$, $LiSnO_3$, $Li_2SiO_3$, $LiAlO_2$, $AlPO_4$ and $AlF_3$.

The second aspect of the present application provides an electrical device including the aforementioned lithium-ion battery.

The lithium-ion battery provided in the present application can achieve the following beneficial effects:

1. The lithium-ion battery provided in the present application makes a rate of deintercalation of lithium ions from the positive electrode coating be relatively balanced with a rate of intercalation into the negative electrode coating by limiting a ratio of the lithium ion migration kinetic coefficient $F_c$ of the positive electrode coating to the lithium ion migration kinetic coefficient $F_a$ of the negative electrode coating to be greater than or equal to 0.25 and less than or equal to 5, so that the charging current is not limited by the relatively smaller rate of the deintercalation rate and intercalation rate of lithium ions, thereby improving the charging capacity of lithium-ion batteries. At the same time, the degree of lithium precipitation caused by the imbalance between the deintercalation and intercalation rates of lithium ions is weakened, the loss of lithium ions is reduced, the attenuation of battery capacity during the cycling charging and discharging process of lithium-ion batteries is reduced, the cycling performance of batteries is improved, the service life of batteries is extended, and the risk of safety hazards caused by lithium dendrites is reduced. In addition, a battery polarization is avoided, which is beneficial for improving the cycling performance of the batteries and extending service life of the batteries.

2. The lithium-ion battery provided in the present application obtains a faster rate of deintercalation of lithium ions from the positive electrode active material by limiting the lithium ion migration kinetic coefficient $F_c$ of the positive electrode coating in a range from 6 to 33, and makes the lithium ions be intercalated into the negative electrode active material faster by limiting the lithium ion migration kinetic coefficient $F_a$ of the negative electrode coating in a range from 7 to 40, resulting in a faster charging rate for the lithium-ion batteries.

## DETAILED DESCRIPTION

The following will provide a clear and complete description of the technical solution of the present application in conjunction with the examples. Obviously, the described examples are a part of the embodiments of the present application, not all of them. Based on the examples in the present application, all other embodiments obtained by ordinary technical personnel in this field without creative labor will fall within the scope of protection in the present application. In addition, the technical features involved in different embodiments of the present application described below can be combined with each other as long as they do not conflict with each other.

This embodiment provides a lithium-ion battery, including a shell, and a positive electrode plate, a negative electrode plate, a separator and an electrolyte which are located within the shell. The positive electrode plate and the negative electrode plate are arranged opposite each other, and the separator is used to separate the positive electrode plate and the negative electrode plate. The positive electrode plate includes a positive current collector and a positive electrode coating arranged on at least one surface of the positive current collector. The negative electrode plate includes a negative current collector and a negative electrode coating arranged on at least one surface of the negative current collector. The lithium ion migration kinetic coefficient $F_c$ of the positive electrode coating and the lithium ion migration kinetic coefficient $F_a$ of the negative electrode coating satisfy:

$$0.25 \leq F_c/F_a \leq 5;$$

$F_c = 2(Dv_c50 + 5M_c) + PD_c/4P_c$, where $Dv_c50$ $\mu$m is an average particle size of a positive active material in the positive electrode coating; $M_c$ Q is an internal resistance of the positive electrode plate; $PD_c$ g/cm$^3$ is a compaction density of the positive electrode coating; and $P_c$ is a porosity of the positive electrode coating;

$F_a = Dv_a50 + M_a + PD_a/2P_a$, where $Dv_a50$ $\mu$m is an average particle size of a negative active material in the negative electrode coating; $M_a$ mQ is an internal resistance of the negative electrode plate; $PD_a$ g/cm$^3$ is a compaction density of the negative electrode coating; and $P_a$ is a porosity of the negative electrode coating.

In the above-mentioned lithium-ion battery, a ratio of the lithium ion migration kinetic coefficient $F_c$ of the positive electrode coating to the lithium ion migration kinetic coefficient $F_a$ of the negative electrode coating is greater than or equal to 0.25 and less than or equal to 5, such that a rate of deintercalation of lithium ions from the positive electrode coating is relatively balanced with a rate of intercalation of lithium ions into the negative electrode coating, and the charging current is not limited by the relatively smaller speed of the deintercalation rate and intercalation rate of lithium ions, thereby improving the charging capacity of lithium-ion batteries. At the same time, the degree of lithium precipitation caused by the imbalance between the deintercalation rate and intercalation rate of lithium ions is weakened, the loss of lithium ions is reduced, the attenuation of battery capacity during the cycling charging and discharging process of lithium-ion batteries is reduced, the cycling performance of batteries is improved, the service life of batteries is extended, and the risk of safety hazards caused by lithium dendrites is reduced. In addition, a battery polarization is avoided, which is beneficial for improving the cycling performance of the batteries and extending the service life of the batteries.

For example, the lower limit value of $F_c/F_a$ can be any one selected from 0.25, 0.26, 0.27, 0.28, 0.29, 0.30, 0.31, 0.32, 0.33, 0.34 and 0.35, and the upper limit value of $F_c/F_a$ can be any one selected from 2.5, 2.8, 3.0, 3.2, 3.4, 3.6, 3.8, 4.0, 4.2, 4.4, 4.6, 4.8 and 5.0, or a range composed of any two values therein.

In some embodiments, the positive electrode coating and the negative electrode coating satisfy $0.25 \leq F_c/F_a < 3.8$.

In some embodiments, the positive electrode coating and the negative electrode coating satisfy $0.25 \leq F_c/F_a < 3.0$.

In some embodiments, the positive electrode coating and the negative electrode coating satisfy $0.25 \leq F_c/F_a \leq 2.8$. The comprehensive performance of lithium-ion batteries can be better improved when $F_c/F_a$ is within the above range.

In some embodiments, the lithium ion migration kinetic coefficient $F_c$ of the positive electrode coating is in a range from 6 to 33, and the lithium ion migration kinetic coefficient $F_a$ of the negative electrode coating is in a range from 7 to 40. By limiting the lithium ion migration kinetic coefficient $F_c$ of the positive electrode coating in a range from 6 to 33, a rate of deintercalation of lithium ions from the positive electrode active material is faster, and by limiting the lithium ion migration kinetic coefficient $F_a$ of the negative electrode coating in a range from 7 to 40, a rate of intercalation of lithium ions into the negative electrode active material is faster, thereby enabling the lithium-ion battery to have a faster charging speed. For example, the lithium ion migration kinetic coefficient $F_c$ of the positive electrode coating may be any value selected from 6, 8, 10, 15, 20, 22, 25, 28, 30 and 33, or a range composed of any two values therein. The lithium ion migration kinetic coefficient $F_a$ of the negative electrode coating may be any value selected from 7, 10, 15, 20, 25, 28, 30, 35 and 40, or a range composed of any two values therein.

In some embodiments, the lithium ion migration kinetic coefficient $F_c$ of the positive electrode coating is in a range from 8 to 22, and the lithium ion migration kinetic coefficient $F_a$ of the negative electrode coating is in a range from 10 to 28.

In some embodiments, an average particle size $Dv_c50$ $\mu$m of a positive electrode active material is in a range from 2 $\mu$m to 8 $\mu$m. If the average particle size of the positive electrode active material is too large, it will lead to a too large transmission distance of lithium ions, thereby affecting the deintercalation rate of lithium ions. If the average particle size of the positive electrode active material is too small, it will produce more side reactions with the electrolyte, affecting the high-temperature storage and gas production performance of lithium-ion batteries. By adjusting the average particle size $Dv_c50$ $\mu$m of the positive electrode active material into the above range, it not only reduces the transmission distance of lithium ions, thereby increasing the deintercalation rate of lithium ions, but also limits the degree of side reactions between the positive electrode active material and the electrolyte, which is beneficial for the high-temperature storage and gas production performance of lithium-ion batteries. For example, the average particle size $Dv_c50$ $\mu$m of the positive electrode active material may be any value of 2 $\mu$m, 2.53 $\mu$m, 3 $\mu$m, 4 $\mu$m, 5 $\mu$m, 6 $\mu$m, 7 $\mu$m, 7.56 $\mu$m and 8 $\mu$m, or can be a range composed of any two values therein.

In some embodiments, the average particle size $Dv_c50$ $\mu$m of the positive electrode active material is in a range from 2.53 $\mu$m to 7.56 $\mu$m.

For an average particle size of the positive electrode active material in the positive electrode coating, a positive electrode plate is placed in a muffle furnace, maintained at a high temperature of 400°C for 4-5 hours, and then the sintered product is separated from the current collector, then the liquid phase is filtered by centrifugation, dried and separated to obtain a sample of the positive electrode active material in the positive electrode coating. In some embodiments, the average particle size $Dv_a 50$ μm of the negative active material is in a range from 6 μm to 20 μm. If the average particle size of the negative electrode active material is too large, it will lead to a too large transmission distance of lithium ions, thereby affecting the intercalation speed of lithium ions. If the average particle size of the negative electrode active material is too small, it will produce more side reactions with the electrolyte, affecting the high-temperature storage and gas production performance of lithium-ion batteries. By adjusting the average particle size $Dv_a 50$ μm of the negative electrode active material into the above range, it not only reduces the transmission distance of lithium ions, thereby increasing the deintercalation rate of lithium ions, but also limits the degree of side reactions between negative electrode active materials and electrolyte, which is beneficial for the high-temperature storage and gas production performance of lithium-ion batteries. For example, the average particle size $Dv_a 50$ μm of negative active material may be any value selected from 6 μm, 8 μm, 10 μm, 12 μm, 14 μm, 16 μm, 18 μm, and 20 μm, or a range composed of any two values therein.

In some embodiments, the average particle size $Dv_a 50$ μm of the negative active material is in a range from 8 μm to 18 μm.

For the negative active material in the negative electrode coating, a negative electrode plate is soaked in DMC (dimethyl carbonate) solution, cleaned, dried, and then heat-treated at 800°C under an argon atmosphere for 2 hours. After separating, a sample of the negative active material in the negative electrode coating is obtained.

In some embodiments, an internal resistance $M_c$ Q of the positive electrode plate is in a range from 0.05 Ω to 1.6 Ω. The smaller internal resistance of the positive electrode plate reduces the comprehensive impedance of lithium-ion batteries, allowing for faster migration rate of lithium ions in the positive electrode coating, which is beneficial for improving the charging capacity of lithium-ion batteries. For example, the internal resistance $M_c$ Q of the positive electrode plate can be any value of 0.05 Ω, 0.07 Ω, 0.09 Ω, 0.1 Ω, 0.2 Ω, 0.4 Ω, 0.5 Ω, 0.6 Ω, 0.8 Ω, 0.9 Ω, 1.00 Ω, 1.04 Ω, 1.1 Ω, 1.2 Ω, 1.4 Ω, 1.6 Ω, or a range composed of any two values therein.

In some embodiments, the internal resistance $M_c$ Q of the positive electrode plate is in a range from 0.05 Q to 0.9 Q.

In some embodiments, the internal resistance $M_c$ Ω of the positive electrode plate is in a range from 0.05 Ω to 0.5 Ω.

In some embodiments, the internal resistance $M_a$ mΩ of the negative electrode plate is in a range from 0.8mΩ to 15mΩ. The smaller internal resistance of negative electrode plate reduces the comprehensive impedance of lithium-ion batteries, allowing for faster migration of lithium ions in the negative electrode coating, which is beneficial for improving the charging capacity of lithium-ion batteries. For example, the internal resistance $M_a$ mΩ of the negative electrode plate can be any value of 0.8mΩ, 1.0mΩ, 2.0mΩ, 3.0mΩ, 5.0mΩ, 7.0mΩ, 8.0mΩ, 10mΩ, 12mΩ, 13mΩ, 14mΩ, 15mΩ, or a range composed of any two values therein.

In some embodiments, the internal resistance $M_a$ mΩ of the negative electrode plate is in a range from 0.8mΩ to 10mΩ.

In some embodiments, a compaction density $PD_c$ g/cm$^3$ of the positive electrode coating is in a range from 3.0g/cm$^3$ to 3.8g/cm$^3$, and a porosity of the positive electrode coating is in a range from 20% to 50%. In general, the smaller the compaction density of the positive electrode coating, the greater the porosity of the positive electrode coating, the more developed the internal pore structure, the better the ability to retain the electrolyte, the better the contact effect between the electrolyte and the positive electrode coating, and the better the liquid phase conductivity ability of lithium ions inside the pores of the positive electrode coating. However, the excessive porosity of the positive electrode coating can lead to too small electron transmission ability, thereby affecting its charging ability. By limiting the compaction density and porosity of the positive electrode coating into the above range, the transmission capacity of lithium ions and electrons is balanced, resulting in excellent transmission capacity of both lithium ions and electrons in the positive electrode coating, which is beneficial for improving the charging capacity of lithium-ion batteries. At the same time, limiting the compaction density and porosity of the positive electrode coating into the above range can ensure that the positive electrode active material has high particle integrity and good electrical contact effect between adjacent particles, which is conducive to improving the energy density of lithium-ion batteries. For example, the compaction density of the positive electrode coating, $PD_c$ g/cm$^3$, may be any value of 3.0g/cm$^3$, 3.1g/cm$^3$, 3.2g/cm$^3$, 3.3g/cm$^3$, 3.4g/cm$^3$, 3.5g/cm$^3$, 3.6g/cm$^3$, 3.7g/cm$^3$, 3.8g/cm$^3$, or a range composed of any two values therein. The porosity of the positive electrode coating is any value of 20%, 25%, 30%, 35%, 40%, 45%, 50%, or a range composed of any two values therein.

In some embodiments, the compaction density $PD_c$ g/cm$^3$ of the positive electrode coating is in a range from 3.1g/cm$^3$ to 3.6g/cm$^3$, and the porosity of the positive electrode coating is in a range from 20% to 40%.

In some embodiments, a compaction density $PD_a$ g/cm$^3$ of the negative electrode coating is in a range from 1.4g/cm$^3$ to 1.8g/cm$^3$, and a porosity of the negative electrode coating is in a range from 20% to 60%. In general, the smaller the compaction density of the negative electrode coating, the greater the porosity of the negative electrode coating, the more developed the internal pore structure, the better the ability to retain the electrolyte, the better the contact effect between the electrolyte and the negative electrode coating, and the better the liquid phase conductivity ability of lithium ions inside the pores of the negative electrode coating. However, the excessive porosity of the negative electrode coating can lead to too small electron transmission ability, thereby affecting its charging ability. By limiting the compaction density and porosity of the negative electrode coating into the above range, the transmission capacity of lithium ions and electrons is balanced, resulting in excellent transmission capacity of both lithium ions and electrons in the negative electrode coating, which is beneficial for improving the charging capacity of lithium-ion batteries. At the same time, limiting the compaction density and porosity of the negative electrode coating into the above range can ensure that the negative electrode active material has high particle integrity and good electrical contact effect between adjacent particles, which is conducive to improving the energy density of lithium-ion batteries. For example, the compaction density $PD_a$ g/cm$^3$ of the negative electrode coating is 1.4g/cm$^3$, 1.5g/cm$^3$, 1.6g/cm$^3$, 1.7g/cm$^3$ or 1.8g/cm$^3$. The porosity of the negative electrode coating may be any value selected from 20%, 25%, 30%, 35%, 40%, 45%, 50%, 55%, 60%, or a range composed of any two values therein.

In some embodiments, the compaction density $PD_a$ g/cm$^3$ of the negative electrode coating is in a range from 1.4g/cm$^3$ to 1.7g/cm$^3$, and the porosity of the negative electrode coating is in a range from 35% to 55%.

It should be understood that the compaction density of the positive electrode coating or the negative electrode coating is defined as PD=m/V, where m represents the weight of the coating and V represents the volume of the coating. m can be measured and obtained using an electronic balance with an accuracy of 0.01g or more, and the product of the surface area of the coating and the thickness of the coating is the volume V of the coating, where the thickness can be measured and obtained using a spiral micrometer with an accuracy of 0.5 $\mu$m. The internal resistance $M_c$ $\Omega$ and $M_a$ m$\Omega$ of the positive and negative electrode plates can be tested and obtained using a membrane resistance testing system. The porosity P of the positive and negative electrode coatings can be obtained by gas displacement method, with porosity $P=(V_1-V_2)/V_1 \times 100\%$, wherein Vi represents the apparent volume, $V_2$ represents the actual volume. The measurement step for the average particle size Dv50 of positive and negative active materials is to use a laser diffraction particle size distribution measuring instrument to measure the particle size distribution based on the particle size distribution laser diffraction method (refer to GB/T19077-2016 for details), and the median value of the volume distribution is the value of Dv50.

In some embodiments, the positive electrode active material includes a lithium-containing compound with a layered structure, the lithium-containing compound is $LiMO_2$, and M includes at least one of Ni, Co, Al and Mn, such as spinel lithium manganate and spinel lithium nickel manganate.

In some embodiments, the positive electrode active material includes lithium nickel cobalt manganese oxide, with a nickel element content greater than 0.3 and less than 0.85 calculated based on the molar amount of nickel, cobalt and manganese elements being 1.

In some embodiments, the positive electrode active material includes lithium nickel cobalt manganese oxide, with a nickel element content greater than 0.4 and less than 0.85 calculated based on the molar amount of nickel, cobalt and manganese elements being 1.

In some embodiments, the positive electrode active material includes lithium nickel cobalt manganese oxide, with a nickel element content greater than 0.52 and less than 0.83 calculated based on the molar amount of nickel, cobalt and manganese elements being 1.

In some embodiments, the positive electrode active material includes lithium nickel cobalt aluminum oxide, with a nickel element content greater than 0.5 and less than 0.85 calculated based on the molar amount of nickel, cobalt and aluminum elements being 1.

In some embodiments, at least some of the positive electrode active materials are single crystal particles. This can reduce the contact area between the positive electrode active material and the electrolyte, thereby reducing the occurrence of interface side reactions and thereby reducing the gas production amount inside the lithium-ion batteries, which is beneficial for improving the cycling performance of lithium-ion batteries.

In some embodiments, the positive electrode active material is a modified positive electrode active material.

In some embodiments, the modified positive electrode active material includes a doping element, and the doping element includes at least one of Al, Zr, Sr, Ti, B, Mg, V, Ba, W, Y, Nb, F, P and S. By doping in the lattice of the positive electrode active material, the cation mixing of Li/Ni in the positive electrode active material can be inhibited, which helps to reduce the first irreversible capacity, makes the layered structure of the positive electrode active material more complete, makes the crystal structure more stable, and makes the probability of particle breakage and crystal structure damage more lower, which is beneficial for improving the cycling performance and thermal stability of lithium-ion batteries.

In some embodiments, doping agents containing F ions are used. F ions not only promote the sintering of the positive electrode active material and make the structure of the positive electrode active material more stable, but also stabilize the interface between the positive electrode active material and the electrolyte during battery cycling, which is beneficial for improving the cycling performance of lithium-ion batteries. The modification method of ion doping is not limited, which can be modified in the way of wet doping in the precursor co-precipitation stage, or can be modified in the way of dry doping in the sintering stage.

In some embodiments, the modified positive electrode active material includes a coating agent, and the constituent elements of the coating agent include at least one of Li, Al, Ti, Mn, Zr, Mg, Zn, Ba, Mo, B, W and Co. The above coating elements can form a protective layer with better performance on the surface of the positive electrode active material particles, thereby reducing direct contact between the electrolyte and the positive electrode active material, and improving the cycling performance of the battery.

In some embodiments, the coating agent includes metal oxides, wherein the metal oxide includes an oxide formed from at least one of Al, Ti, Mn, Zr, Mg, Zn, Ba, Mo, B, W and Co.

In some embodiments, the coating agent includes inorganic salts, wherein the inorganic salt includes at least one of $Li_2ZrO_3$, $LiNbO_3$, $Li_4Ti_5O_{12}$, $Li_2TiO_3$, $LiTiO_2$, $Li_3VO_4$, $LiSnO_3$, $Li_2SiO_3$, $LiAlO_2$, $AlPO_4$ and $AlF_3$.

The coating agent forms a coating layer on the surface of the positive electrode active material, which can avoid direct contact between the electrolyte and the positive electrode active material, thereby greatly reducing the side reactions between the electrolyte and the positive electrode active material, reducing the dissolution of transition metals from the positive electrode active material into the electrolyte, and thereby improving the electrochemical stability of the positive electrode active material. The existence of the coating layer can also reduce the degree of crystal structure collapse of the positive electrode active material during repeated charging and discharging processes, reduce the probability of particle breakage and crystal structure damage, and thus improve the cycling performance of lithium-ion batteries. The specific modification method of coating is not limited, which can be modified in the way of wet coating in the precursor co-precipitation stage, or can be modified in the way of dry coating in the sintering stage.

In some embodiments, the negative electrode active material includes at least one of graphite, soft carbon, hard carbon, carbon fibers, mesophase carbon microspheres, silicon-based materials, tin-based materials and lithium titanate. Graphite can be at least one of artificial graphite, natural graphite and modified graphite. Silicon-based materials can be selected from one or more of elemental silicon, oxides of silicon, silicon carbon composites and silicon alloys. The tin-based materials can be selected from one or more of elemental substance tin, tin oxides and tin alloys.

In some embodiments, the positive current collector includes but is not limited to aluminum foil, nickel foil or polymer conductive film, the negative current collector includes but is not limited to copper foil, carbon coated copper foil or polymer conductive film, and the separator includes but is not limited to polyethylene film, polypropylene film, polyvinylidene fluoride film and multi-layer composite film composed of the aforementioned materials.

In some embodiments, the positive current collector is aluminum foil, and the negative current collector is copper foil.

In some embodiments, the positive and negative electrode coatings also include conductive agents and binders. The types and contents of conductive agents and binders are not subject to specific restrictions and can be selected according to actual needs.

In some embodiments, the electrolyte includes lithium salts and organic solvents. The lithium salt includes but is not limited to at least one of lithium hexafluorophosphate, lithium tetrafluoroborate and lithium perchlorate. The organic solvent includes but is not limited to at least one of cyclic carbonates, chain carbonates and carboxylates. The electrolyte can also contain functional additives, such as ethylene carbonate, ethylene sulfate, 1,3-propanesulfonic acid lactone, fluoroethylene carbonate, etc.

The following provides a clear and complete description of the technical solution of the present application by providing specific embodiments as examples. Obviously, the described examples are a part of the embodiments of the present application, not all of them.

### EXAMPLE 1

Preparation of positive electrode plate

The positive electrode active material $Li_aNi_xCo_yM_{1-x-y}O_2$ with a $Dv_c50$ μm of 2.5 μm, conductive agent acetylene black, and binder PVDF were mixed in a mass ratio of 96:3:1, solvent NMP was added, and the mixture was stirred with a vacuum mixer until the system was uniform to obtain positive electrode slurry. The positive electrode active material was $Li_aNi_xCo_yM_{1-x-y}O_2$, and the molar content of Ni, Co, and Mn met the requirement of Ni: Co: Mn=6:1:3 (hereinafter referred to as NCM613); the positive electrode slurry was uniformly coated on the positive electrode current collector, dried at room temperature, transferred to an oven for further drying, and then cold pressed to achieve a positive electrode coating with the compaction density of 3.2g/cm³, and cut into positive electrode plates. The internal resistance of the positive electrode plate was 0.282 Q, and the porosity of the positive electrode coating was 25.58%.

Preparation of negative electrode plate

The negative electrode active material with a $Dv_a50$ μm of 18.5 μm, conductive agent acetylene black, thickener CMC, and binder SBR were mixed in a mass ratio of 96.1:1.0:1.0:1.9, and then the mixture was added with solvent deionized water, and stirred with a vacuum mixer until the system was uniform to obtain negative electrode slurry; the negative electrode slurry was uniformly coated on the negative electrode current collector, dried at room temperature, transferred to an oven for further drying, and then cold pressed twice to achieve a negative electrode coating with compaction density of 1.6g/cm$^3$, and cut into negative electrode plates, and the internal resistance of the negative electrode plate was 4.81mΩ, and the porosity of the negative electrode coating was 34.27%.

**EXAMPLE 2**

Preparation of positive electrode plate

The preparation scheme of the positive electrode plate described in this example is the same as that in Example 1. The preparation method of the positive electrode plate was the same, with the only difference being that adjusting the cold pressing process, such that the compaction density of the positive electrode coating, the internal resistance of the positive electrode plate, and the porosity of the positive electrode coating were as shown in Table 1.

Preparation of negative electrode plate

The preparation scheme of the negative electrode plate described in this example was the same as that in Example 1. The preparation method of the negative electrode plate was the same, with the only difference being that adjusting the cold pressing process, such that the compaction density of the negative electrode coating was 1.5g/cm$^3$, and the internal resistance of the negative electrode plate and the porosity of the negative electrode coating were shown in Table 2.

**EXAMPLE 3**

Preparation of positive electrode plate

The preparation scheme of the positive electrode plate described in this example was the same as that in Example 1. The preparation method of the positive electrode plate was the same, with the only difference being that the average particle size of the positive active material, $Dv_a50$ μm, was adjusted to 1.8 μm, and the internal resistance of the positive electrode plate and the porosity of the positive electrode coating were shown in Table 1.

Preparation of negative electrode plate

The preparation scheme of the negative electrode plate described in this example was the same as that in Example 1.

**EXAMPLE 4**

Preparation of positive electrode plate

The preparation scheme of the positive electrode plate described in this example was the same as that in Example 3. The preparation method of the positive electrode plate was the same, with the difference being that the average particle size of the positive active material, $Dv_c50$ μm, was adjusted to 3.5 μm, and the internal resistance of the positive electrode plate, the porosity of the positive electrode coating, and the compaction density of the positive electrode coating were shown in Table 1.

Preparation of negative electrode plate

The preparation scheme of the negative electrode plate described in this example was the same as that in Example 1. The preparation method of the negative electrode plate was the same, with the differences being that the average particle size of the negative active material, $Dv_a50$ μm, was adjusted to 17.5 μm, and the cold pressing process was adjusted to make the compaction density of the negative electrode coating as 1.8g/cm$^3$, and the internal resistance of the negative electrode plate and the porosity of the negative electrode coating were shown in Table 2.

**EXAMPLE 5**

Preparation of positive electrode plate

The preparation scheme of the positive electrode plate described in this example was the same as that in Example 4. The preparation method of the positive electrode plate was the same, with the differences being that 100ppm of tungsten and 200ppm of strontium were doped in the preparation process of the positive active material; and the cold pressing process was adjusted to make the compaction density of the positive electrode coating as $3.5g/cm^3$, and the internal resistance of the positive electrode plate and the porosity of the positive electrode coating were shown in Table 1.

Preparation of negative electrode plate

The preparation scheme of the negative electrode plate described in this example was the same as that of Example 4, and the internal resistance of the negative electrode plate and the porosity of the negative electrode coating were shown in Table 2.

**EXAMPLE 6**

Preparation of positive electrode plate

The preparation scheme of the positive electrode plate described in this example was the same as that in Example 4. The preparation method of the positive electrode plate was the same, with the differences being that adjusting the cold pressing process such that the compaction density of the positive electrode coating was $3.5g/cm^3$, and the internal resistance of the positive electrode plate and the porosity of the positive electrode coating were shown in Table 1.

Preparation of negative electrode plate

The preparation scheme of the negative electrode plate described in this example was the same as that in Example 1. The preparation method of the negative electrode plate was the same, with the differences being that the average particle size of the negative active material, $Dv_a50$ μm, was 16.4 μm, the compaction density of the negative electrode coating was $1.8g/cm^3$, and the internal resistance of the negative electrode plate and the porosity of the negative electrode coating were shown in Table 2.

**EXAMPLE 7**

Preparation of positive electrode plate

The preparation scheme of the positive electrode plate described in this example was the same as that in Example 6. The preparation method of the positive electrode plate was the same, with the difference being that the average particle size of the positive active material, $Dv_c50$ in μm was 4.2 μm, adjusting the cold pressing process such that the compaction density of the positive electrode coating was 3.1 $g/cm^3$, and the internal resistance of the positive electrode plate and the porosity of the positive electrode coating were shown in Table 1.

Preparation of negative electrode plate

The preparation scheme of the negative electrode plate described in this example was the same as that in Example 6. The preparation method of the negative electrode plate was the same, with the differences being that the negative active material, conductive agent acetylene black, thickener CMC, and adhesive SBR were mixed in a mass ratio of 96.5:0.7:1.0:1.8, the compaction density of the negative electrode coating was $1.45g/cm^3$, and the internal resistance of the negative electrode plate and the porosity of the negative electrode coating were shown in Table 2.

**EXAMPLE 8**

Preparation of positive electrode plate

The preparation scheme of the positive electrode plate described in this example was the same as that in Example 7. The preparation method of the positive electrode plate was the same, with the difference being that the cold pressing process was controlled such that the compaction density of the positive electrode coating was $3.2g/cm^3$, and

the internal resistance of the positive electrode plate and the porosity of the positive electrode coating were shown in Table 1.

Preparation of negative electrode plate

The preparation scheme of the negative electrode plate described in this example was the same as that in Example 6. The preparation method of the negative electrode plate was the same, with the only difference being that the average particle size of the negative active material $Dv_a50$ $\mu$m was 14.8 $\mu$m, the compaction density of the negative electrode coating was 1.45g/cm$^3$, and the internal resistance of the negative electrode plate and the porosity of the negative electrode coating were shown in Table 2.

**EXAMPLE 9**

Preparation of positive electrode plate

The preparation scheme of the positive electrode plate described in this example was the same as that in Example 7. The preparation method of the positive electrode plate was the same, with the only difference being that the cold pressing process was controlled such that the compaction density of the positive electrode coating was 3.3g/cm$^3$, and the internal resistance of the positive electrode plate and the porosity of the positive electrode coating were shown in Table 1.

Preparation of negative electrode plate

The preparation scheme of the negative electrode plate described in this example was the same as that in Example 8. The preparation method of the negative electrode plate was the same, with the differences being that the compaction density of the negative electrode coating was 1.6g/cm$^3$, and the internal resistance of the negative electrode plate and the porosity of the negative electrode coating were shown in Table 2.

**EXAMPLE 10**

Preparation of positive electrode plate

The preparation scheme of the positive electrode plate described in this example was the same as that in Example 7. The preparation method of the positive electrode plate was the same, with the difference being that the cold pressing process was controlled such that the compaction density of the positive electrode coating was 3.4g/cm$^3$, and the internal resistance of the positive electrode plate and the porosity of the positive electrode coating were shown in Table 1.

Preparation of negative electrode plate

The preparation scheme of the negative electrode plate described in this example was the same as that in Example 8. The preparation method of the negative electrode plate was the same, with the difference being that the compaction density of the negative electrode coating was controlled to be 1.75g/cm$^3$, and the internal resistance of the negative electrode plate and the porosity of the negative electrode coating were shown in Table 2.

**EXAMPLE 11**

Preparation of positive electrode plate

The preparation scheme of the positive electrode plate described in this example was the same as that in Example 7. The preparation method of the positive electrode plate was the same, with the only difference being that the cold pressing process was controlled such that the compaction density of the positive electrode coating was 3.5g/cm$^3$, and the internal resistance of the positive electrode plate and the porosity of the positive electrode coating were shown in Table 1.

Preparation of negative electrode plate

The preparation scheme of the negative electrode plate described in this example was the same as that in Example 6. The preparation method of the negative electrode plate was the same, with the differences being that the average particle size of the negative active material, $Dv_a50$ μm, was 13.5 μm, the cold pressing process was controlled such that the compaction density of the negative electrode coating was 1.55g/cm$^3$, and the internal resistance of the negative electrode plate and the porosity of the negative electrode coating were shown in Table 2.

## EXAMPLE 12

Preparation of positive electrode plate

The preparation scheme of the positive electrode plate described in this example was the same as that of Example 11. The preparation method of the positive electrode plate was the same, with the differences being that the positive active material, conductive agent acetylene black, and binder PVDF were mixed in a mass ratio of 96.5:2.5:1, and the cold pressing process was controlled such that the compaction density of the positive electrode coating was 3.5g/cm$^3$, and the internal resistance of the positive electrode plate and the porosity of the positive electrode coating were shown in Table 1.

Preparation of negative electrode plate

The preparation scheme of the negative electrode plate described in this example was the same as that in Example 11. The preparation method of the negative electrode plate is the same, with the difference being that the internal resistance of the negative electrode plate and the porosity of the negative electrode coating are shown in Table 2.

## EXAMPLE 13

Preparation of positive electrode plate

The preparation scheme of the positive electrode plate described in this example was the same as that of Example 11. The preparation method of the positive electrode plate was the same, with the difference being that the positive active material, conductive agent acetylene black, and binder PVDF were mixed in a mass ratio of 97.5:1.5:1, and the cold pressing process was controlled such that the compaction density of the positive electrode coating was 3.5g/cm$^3$, and the internal resistance of the positive electrode plate and the porosity of the positive electrode coating were shown in Table 1.

Preparation of negative electrode plate

The preparation scheme of the negative electrode plate described in this example was the same as Example 11. The preparation method of the negative electrode plate was the same, with the difference being that the compaction density of the negative electrode coating was 1.6g/cm$^3$, and the internal resistance of the negative electrode plate and the porosity of the negative electrode coating were shown in Table 2.

## EXAMPLE 14

Preparation of positive electrode plate

The preparation scheme of the positive electrode plate described in this example was the same as that in Example 11. The preparation method of the positive electrode plate was the same, with the difference being that the positive active material, conductive agent acetylene black, and binder PVDF were mixed in a ratio of 95:4: 1, the cold pressing process was controlled such that the compaction density of the positive electrode coating was 3.5g/cm$^3$, and the internal resistance of the positive electrode plate and the porosity of the positive electrode coating were shown in Table 1.

Preparation of negative electrode plate

The preparation scheme of the negative electrode plate described in this example was the same as that in Example 13. The preparation method of the negative electrode plate was the same, with the difference being that the mixing time of the negative active material, conductive agent acetylene black, thickener CMC, and adhesive SBR was shortened by 1 hour, and the internal resistance of the negative electrode plate and the porosity of the negative electrode coating were shown in Table 2.

**EXAMPLE 15**

Preparation of positive electrode plate

The preparation scheme of the positive electrode plate described in this example was the same as that of Example 10. The preparation method of the positive electrode plate was the same, with the difference being that the average particle size of the positive active material, $Dv_c50$ μm, was 5.8 μm, and the internal resistance of the positive electrode plate, the porosity of the positive electrode coating, and the compaction density of the positive electrode coating were shown in Table 1.

Preparation of negative electrode plate

The preparation scheme of the negative electrode plate described in this example was the same as that in Example 13. The preparation method of the negative electrode plate was the same, with the difference being that the average particle size of the negative active material, $Dv_a50$ μm, was 7.2 μm, and the internal resistance of the negative electrode plate and the porosity of the negative electrode coating were shown in Table 2.

**EXAMPLE 16**

Preparation of positive electrode plate

The preparation scheme of the positive electrode plate described in this example was the same as that in Example 15. The preparation method of the positive electrode plate was the same, with the difference being that the cold pressing process was controlled such that the compaction density of the positive electrode coating was 3.5g/cm$^3$, and the internal resistance of the positive electrode plate and the porosity of the positive electrode coating were shown in Table 1.

Preparation of negative electrode plate

The preparation scheme of the negative electrode plate described in this example was the same as that in Example 13. The preparation method of the negative electrode plate was the same, with the difference being that the average particle size of the negative active material, $Dv_a50$ μm, was 6.3 μm, and the internal resistance of the negative electrode plate and the porosity of the negative electrode coating were shown in Table 2.

**EXAMPLE 17**

Preparation of positive electrode plate

The preparation scheme of the positive electrode plate described in this example was the same as that in Example 15. The preparation method of the positive electrode plate was the same, with the difference being that the cold pressing process was controlled such that the compaction density of the positive electrode coating was 3.6g/cm$^3$, and the internal resistance of the positive electrode plate and the porosity of the positive electrode coating were shown in Table 1.

Preparation of negative electrode plate

The preparation scheme of the negative electrode plate described in this example was the same as that in Example 13. The preparation method of the negative electrode plate was the same, with the difference being that the average particle size of the negative active material, $Dv_a50$ μm, was 10.6 μm, and the internal resistance of the negative electrode plate and the porosity of the negative electrode coating were shown in Table 2.

**EXAMPLE 18**

Preparation of positive electrode plate

The preparation scheme of the positive electrode plate described in this example was the same as that of Example 16. The preparation method of the positive electrode plate was the same, with the difference being that the average particle size of the positive active material, $Dv_c50$ μm, was 6.4 μm, and the internal resistance of the positive electrode plate, the porosity of the positive electrode coating, and the compaction density of the positive electrode coating were shown in Table 1.

Preparation of negative electrode plate

The preparation scheme of the negative electrode plate described in this example was the same as that in Example 17. The preparation method of the negative electrode plate was the same, with the difference being that the negative electrode coating being cold pressed twice becomes being cold pressed once, and the internal resistance of the negative electrode plate and the porosity of the negative electrode coating were shown in Table 2.

**Example 19**

Preparation of positive electrode plate

The preparation scheme of the positive electrode plate described in this example was the same as that in Example 18. The preparation method of the positive electrode plate was the same, with the difference being that the cold pressing process was controlled such that the compaction density of the positive electrode coating was 3.6g/cm$^3$, and the internal resistance of the positive electrode plate and the porosity of the positive electrode coating were shown in Table 1.

Preparation of negative electrode plate

The preparation scheme of the negative electrode plate described in this example was the same as that of Example 18. The preparation method of the negative electrode plate was the same, with the difference being that the mixing time of the negative active material, conductive agent acetylene black, thickener CMC, and adhesive SBR was extended by 1 hour, and the internal resistance of the negative electrode plate, the porosity of the negative electrode coating, and the compaction density of the negative electrode coating were shown in Table 2.

**EXAMPLE 20**

Preparation of positive electrode plate

The preparation scheme of the positive electrode plate described in this example was the same as that in Example 18. The preparation method of the positive electrode plate was the same, with the difference being that the cold pressing process was controlled such that the compaction density of the positive electrode coating was 3.7g/cm$^3$, and the internal resistance of the positive electrode plate and the porosity of the positive electrode coating were shown in Table 1.

Preparation of negative electrode plate

The preparation scheme of the negative electrode plate described in this example was the same as that of Example 18. The preparation method of the negative electrode plate was the same, with the difference being that the mixing time of the negative active material, conductive agent acetylene black, thickener CMC, and adhesive SBR was shortened by 1 hour, and the internal resistance of the negative electrode plate and the porosity of the negative electrode coating were shown in Table 2.

**EXAMPLE 21**

Preparation of positive electrode plate

The preparation scheme of the positive electrode plate described in this example was the same as that in Example 8. The preparation method of the positive electrode plate was the same, with the difference being that the average particle size of the positive active material, $Dv_c50$ $\mu$m, was 7.5 $\mu$m, and the internal resistance of the positive electrode plate, the porosity of the positive electrode coating, and the compaction density of the positive electrode coating were shown in Table 1.

Preparation of negative electrode plate

The preparation scheme of the negative electrode plate described in this example was the same as that in Example 1. The preparation method of the negative electrode plate was the same, with the difference being that the average particle size of the negative active material, $Dv_a50$ $\mu$m, was 6.0 $\mu$m, the cold pressing process was controlled such that the compaction density of the negative electrode coating was 1.6g/cm$^3$, and the internal resistance of the negative electrode plate and the porosity of the negative electrode coating were shown in Table 2.

**EXAMPLE 22**

Preparation of positive electrode plate

The preparation scheme of the positive electrode plate described in this example was the same as that of Example 21. The preparation method of the positive electrode plate was the same, with the difference being that the cold pressing process was controlled such that the compaction density of the positive electrode coating was 3.5g/cm$^3$, and the internal resistance of the positive electrode plate and the porosity of the positive electrode coating were shown in Table 1.

Preparation of negative electrode plate

The preparation scheme of the negative electrode plate described in this example was the same as Example 21.

**EXAMPLE 23**

Preparation of positive electrode plate

The preparation scheme of the positive electrode plate described in this example was the same as that of Example 21. The preparation method of the positive electrode plate was the same, with the difference being that the cold pressing process was controlled such that the compaction density of the positive electrode coating was 3.85g/cm$^3$, and the internal resistance of the positive electrode plate and the porosity of the positive electrode coating were shown in Table 1.

Preparation of negative electrode plate

The preparation scheme of the negative electrode plate described in this example was the same as Example 21.

**EXAMPLE 24**

Preparation of positive electrode plate

The preparation scheme of the positive electrode plate described in this example was the same as that of Example 22. The preparation method of the positive electrode plate was the same, with the difference being that the positive active material, conductive agent acetylene black, and binder PVDF were mixed in a mass ratio of 97:2:1, and the internal resistance of the positive electrode plate, the porosity of the positive electrode coating, and the compaction density of the positive electrode coating were shown in Table 1.

Preparation of negative electrode plate

The preparation scheme of the negative electrode plate described in this example was the same as that in Example 23. The preparation method of the negative electrode plate was the same, with the difference being that the average particle size of the negative active material, $Dv_a50$ $\mu$m, was 12.0 $\mu$m, and the internal resistance of the negative electrode plate and the porosity of the negative electrode coating were shown in Table 2.

**EXAMPLE 25**

Preparation of positive electrode plate

The preparation scheme of the positive electrode plate described in this example was the same as that in Example 9. The preparation method of the positive electrode plate was the same, with the difference being that the positive active material was $Li_aNi_xCo_yM_{1-x-y}O_2$, wherein the molar content of Ni, Co, and Mn satisfies Ni: Co: Mn=8:1:1 (hereinafter referred to as NCM811), the $Dv_c50$ μm of the positive active material was 3.9 μm, and the internal resistance of the positive electrode plate, the porosity of the positive electrode coating, and the compaction density of the positive electrode coating were shown in Table 1.

Preparation of negative electrode plate

The preparation scheme of the negative electrode plate described in this example was the same as that in Example 23. The preparation method of the negative electrode plate was the same, with the difference being that the average particle size of the negative active material, $Dv_a50$ μm, was 6.5 μm, and the internal resistance of the negative electrode plate and the porosity of the negative electrode coating were shown in Table 2.

**EXAMPLE 26**

Preparation of positive electrode plate

The preparation scheme of the positive electrode plate described in this example was the same as that of Implementation 25. The preparation method of the positive electrode plate was the same, with the difference being that the cold pressing process was controlled such that the compaction density of the positive electrode coating was 3.5g/cm³, and the internal resistance of the positive electrode plate and the porosity of the positive electrode coating were shown in Table 1.

Preparation of negative electrode plate

The preparation scheme of the negative electrode sheet in this example was the same as in Example 25, and the preparation method of the negative electrode sheet was the same.

**EXAMPLE 27**

Preparation of positive electrode plate

The preparation scheme of the positive electrode plate described in this example was the same as that of Example 26. The preparation method of the positive electrode plate was the same, with the difference being that the positive active material, conductive agent acetylene black, and binder PVDF were mixed in a mass ratio of 98:1:1, and the internal resistance of the positive electrode plate, the porosity of the positive electrode coating, and the compaction density of the positive electrode coating were shown in Table 1.

Preparation of negative electrode plate

The preparation scheme of the negative electrode plate described in this example was the same as that in Example 25. The preparation method of the negative electrode plate was the same, with the difference being that the negative active material, conductive agent acetylene black, thickener CMC, and adhesive SBR were mixed in a mass ratio of 96.0:1.3:1.0:1.7, and the internal resistance of the negative electrode plate and the porosity of the negative electrode coating were shown in Table 2.

**EXAMPLE 28**

Preparation of positive electrode plate

The preparation scheme of the positive electrode plate described in this example was the same as that in Example 25. The preparation method of the positive electrode plate was the same, with the only difference being that the average particle size of the positive active material, $Dv_c50$ μm, was 4.3 μm, and the internal resistance of the positive electrode plate, the porosity of the positive electrode coating, and the compaction density of the positive electrode coating were shown in Table 1.

Preparation of negative electrode plate

The preparation scheme of the negative electrode sheet in this example was the same as in Example 25, and the preparation method of the negative electrode sheet was the same.

**EXAMPLE 29**

Preparation of positive electrode plate

The preparation scheme of the positive electrode plate described in this example was the same as that in Example 28. The preparation method of the positive electrode plate was the same, with the only difference being that cold pressing causes the compaction density of the positive electrode coating to be 3.6g/cm$^3$, and the internal resistance of the positive electrode plate and the porosity of the positive electrode coating were shown in Table 1.

Preparation of negative electrode plate

The preparation scheme of the negative electrode plate described in this example was the same as that in Example 25. The preparation method of the negative electrode plate was the same, with the difference being that the average particle size of the negative active material, $Dv_a50$ $\mu$m, was 8.5 $\mu$m, and the internal resistance of the negative electrode plate and the porosity of the negative electrode coating were shown in Table 2.

**EXAMPLE 30**

Preparation of positive electrode plate

The preparation scheme of the positive electrode plate described in this example was the same as that in Example 28. The preparation method of the positive electrode plate was the same, with the difference being that the cold pressing process was controlled such that the compaction density of the positive electrode coating was 3.5g/cm$^3$, and the internal resistance of the positive electrode plate and the porosity of the positive electrode coating were shown in Table 1.

Preparation of negative electrode plate

The preparation scheme of the negative electrode sheet in this example was the same as in Example 25, and the preparation method of the negative electrode sheet was the same.

**COMPARATIVE EXAMPLE 1**

Preparation of positive electrode plate

The preparation scheme of the positive electrode plate described in this example was the same as that in Example 7. The preparation method of the positive electrode plate was the same, with the difference being that the average particle size of the positive active material, $Dv_c50$ $\mu$m, was 2.0 $\mu$m, and the internal resistance of the positive electrode plate and the porosity of the positive electrode coating were shown in Table 1.

Preparation of negative electrode plate

The preparation scheme of the negative electrode plate described in this example was the same as that in Example 1. The preparation method of the negative electrode plate was the same, with the difference being that the average particle size of the negative active material, $Dv_a50$ $\mu$m, was 16.5 $\mu$m, cold pressing results in a compaction density of 1.7g/cm$^3$ for the negative electrode coating, and the internal resistance of the negative electrode plate and the porosity of the negative electrode coating were shown in Table 2.

**COMPARATIVE EXAMPLE 2**

Preparation of positive electrode plate

The preparation scheme of the positive electrode plate described in this example was the same as that in Example 20. The preparation method of the positive electrode plate was the same, with the differences being that the average particle size of the positive active material, $Dv_c50$ μm, was 9.0 μm, and the internal resistance of the positive electrode plate and the porosity of the positive electrode coating were shown in Table 1.

Preparation of negative electrode plate

The preparation scheme of the negative electrode plate described in this example was the same as that in Example 1. The preparation method of the negative electrode plate was the same, with the differences being that the average particle size of the negative active material, $Dv_a50$ μm, was 4.0 μm, cold pressing results in a compaction density of 1.5g/cm³ for the negative electrode coating, and the internal resistance of the negative electrode plate and the porosity of the negative electrode coating were shown in Table 2.

**COMPARATIVE EXAMPLE 3**

Preparation of positive electrode plate

The preparation scheme of the positive electrode plate described in this example was the same as that in Example 6. The preparation method of the positive electrode plate was the same, with the differences being that the average particle size of the positive active material, $Dv_c50$ μm, was 2.3 μm, and the internal resistance of the positive electrode plate and the porosity of the positive electrode coating were shown in Table 1.

Preparation of negative electrode plate

The preparation scheme of the negative electrode plate described in this example was the same as that in Example 1. The preparation method of the negative electrode plate was the same, with the differences being that the average particle size of the negative active material, $Dv_a50$ μm, was 20.5 μm, cold pressing results in a compaction density of 1.65g/cm³ for the negative electrode coating, and the internal resistance of the negative electrode plate and the porosity of the negative electrode coating were shown in Table 2.

**COMPARATIVE EXAMPLE 4**

Preparation of positive electrode plate

The preparation scheme of the positive electrode plate described in this example was the same as that in Example 20. The preparation method of the positive electrode plate was the same, with the differences being that the average particle size of the positive active material, $Dv_c50$ μm, was 10.5 μm, and the internal resistance of the positive electrode plate and the porosity of the positive electrode coating were shown in Table 1.

Preparation of negative electrode plate

The preparation scheme of the negative electrode plate described in this example was the same as that in Comparative Example 2. The preparation method of the negative electrode plate was the same, with the differences being that the average particle size of the negative active material, $Dv_a50$ μm, was 4.5 μm, and the internal resistance of the negative electrode plate and the porosity of the negative electrode coating were shown in Table 2.

Preparation of electrolyte

Ethylene carbonate (EC), methyl ethyl carbonate (EMC), and diethyl carbonate (DEC) were mixed in a mass ratio of 1:1:1, then 1 mol/L of $LiPF_6$ was added and mix evenly. Then 1% ethylene carbonate was added to prepare an electrolyte.

Separator

APP separator with thickness of 16 μm was selected as the separator.

The assembly process of lithium-ion batteries included: the positive electrode plate, the separator, and the negative electrode plate were stacked in sequence, so that the separator separates the positive electrode plate and the negative electrode plate, and a stacking structure was obtained; the stacked structure was wound to obtain a bare battery cell; the bare battery cell was placed in the shell, dried and injected with electrolyte. Lithium-ion batteries were obtained through processes such as vacuum packaging, standing, formation, and shaping.

Table 1 showed the materials and parameters of the positive electrode active materials in Examples 1-30 and Comparative Examples 1-4. Table 2 showed the materials and parameters of the negative electrode active materials in Examples 1-30 and Comparative Examples 1-4.

The steps of testing the resistance of the electrode plates included: preparing a test sample with a test area of 154.025mm$^2$, a triggering pressure of 0.390t, a sampling time of 15s, and 10 tests. The average value obtained was the internal resistance of the sample.

The steps of testing the porosity of the coating included: referring to the standard GB/T 21650.2-2008, using the mercury intrusion method and gas adsorption method to determine the pore size distribution and porosity of solid materials; using gas adsorption method for determining the amount of adsorbed gas in mesopores and macropores; and measuring the porosity of the coating using the static capacity method.

The $F_c/F_a$ of the lithium-ion batteries provided by the Examples and Comparative Examples were calculated, and the dynamic performance and cycling performance tests were performed on the lithium-ion batteries provided by the Examples and Comparative Examples. The results were shown in Table 3.

Among them, the steps of testing the dynamic performance include: at 25°C, the lithium-ion batteries provided by the Examples and Comparative Examples were fully charged at 4C and discharge at 1C for 10 times, then they were fully charged at 4C, subsequently, the negative electrode plates were disassembled to observe the state of lithium precipitation on the surface of the negative electrode plates. If the area of the lithium precipitation area on the surface of the negative electrode was less than 5%, it was considered slight lithium precipitation. If the area of the lithium precipitation area on the surface of the negative electrode was between 5% and 40%, it was considered moderate lithium precipitation. If the area of the lithium precipitation area on the surface of the negative electrode was greater than 40%, it was considered severe lithium precipitation.

The steps of testing the cycling performance include: at 25°C, the lithium-ion batteries provided by the Examples and Comparative Examples were charged at a rate of 1C and discharged at a rate of 1C, and a full charge and discharge cycle test was conducted until the capacity of the lithium-ion battery decays to 80% of the initial capacity, and the number of cycles was recorded.

**Table 1**

| | | Positive electrode active material | $Dv_c50(\mu m)$ | $PD_c(g/cm^3)$ | $M_c(\Omega)$ | $P_c(\%)$ | $F_c$ |
|---|---|---|---|---|---|---|---|
| | Example 1 | NCM613 | 2.5 | 3.20 | 0.282 | 25.58 | 10.947 |
| | Example 2 | NCM613 | 2.5 | 3.30 | 0.258 | 23.62 | 11.073 |
| | Example 3 | NCM613 | 1.8 | 3.20 | 0.232 | 22.22 | 9.520 |
| | Example 4 | NCM613 | 3.5 | 3.35 | 0.256 | 29.83 | 12.368 |
| | Example 5 | NCM613 | 3.5 | 3.35 | 0.238 | 28.67 | 12.301 |
| | Example 6 | NCM613 | 3.5 | 3.50 | 0.209 | 27.45 | 12.278 |
| | Example 7 | NCM613 | 4.2 | 3.10 | 0.306 | 35.69 | 13.631 |
| | Example 8 | NCM613 | 4.2 | 3.20 | 0.285 | 31.23 | 13.812 |
| | Example 9 | NCM613 | 4.2 | 3.30 | 0.267 | 28.35 | 13.980 |
| | Example 10 | NCM613 | 4.2 | 3.40 | 0.258 | 25.55 | 14.307 |
| | Example 11 | NCM613 | 4.2 | 3.50 | 0.249 | 25.89 | 14.270 |
| | Example 12 | NCM613 | 4.2 | 3.50 | 0.427 | 26.96 | 15.916 |
| | Example 13 | NCM613 | 4.2 | 3.50 | 0.932 | 27.28 | 20.927 |
| | Example 14 | NCM613 | 4.2 | 3.50 | 0.078 | 25.67 | 12.589 |
| | Example 15 | NCM613 | 5.8 | 3.40 | 0.447 | 30.64 | 18.844 |
| | Example 16 | NCM613 | 5.8 | 3.50 | 0.415 | 28.79 | 18.789 |
| | Example 17 | NCM613 | 5.8 | 3.60 | 0.396 | 26.86 | 18.911 |
| | Example 18 | NCM613 | 6.4 | 3.50 | 0.416 | 29.39 | 19.937 |
| | Example 19 | NCM613 | 6.4 | 3.60 | 0.378 | 27.68 | 19.831 |

(continued)

|  | Positive electrode active material | $Dv_c50(\mu m)$ | $PD_c(g/cm^3)$ | $M_c(\Omega)$ | $P_c(\%)$ | $F_c$ |
|---|---|---|---|---|---|---|
| Example 20 | NCM613 | 6.4 | 3.70 | 0.365 | 25.32 | 20.103 |
| Example 21 | NCM613 | 7.5 | 3.20 | 0.983 | 36.67 | 27.012 |
| Example 22 | NCM613 | 7.5 | 3.50 | 0.728 | 31.32 | 25.074 |
| Example 23 | NCM613 | 7.5 | 3.85 | 1.077 | 25.78 | 29.504 |
| Example 24 | NCM613 | 7.5 | 3.50 | 1.135 | 37.15 | 28.705 |
| Example 25 | NCM811 | 3.9 | 3.30 | 0.306 | 34.73 | 13.235 |
| Example 26 | NCM811 | 3.9 | 3.50 | 0.285 | 28.65 | 13.704 |
| Example 27 | NCM811 | 3.9 | 3.50 | 1.073 | 29.32 | 21.514 |
| Example 28 | NCM811 | 4.3 | 3.30 | 0.352 | 35.44 | 14.448 |
| Example 29 | NCM811 | 4.3 | 3.60 | 0.498 | 28.97 | 16.687 |
| Example 30 | NCM811 | 4.3 | 3.50 | 0.586 | 29.64 | 17.412 |
| Comparative Example 1 | NCM613 | 2.0 | 3.10 | 0.058 | 35.62 | 6.756 |
| Comparative Example 2 | NCM613 | 9.0 | 3.70 | 1.091 | 21.65 | 33.183 |
| Comparative Example 3 | NCM613 | 2.3 | 3.50 | 0.067 | 38.73 | 7.529 |
| Comparative Example 4 | NCM811 | 10.5 | 3.70 | 1.176 | 23.68 | 36.666 |

**Table 2**

|  | Negative electrode active material | $Dv_a50(\mu m)$ | $PD_a(g/cm^3)$ | $M_a(m\Omega)$ | $P_a(\%)$ | $F_a$ |
|---|---|---|---|---|---|---|
| Example 1 | graphite | 18.5 | 1.60 | 4.81 | 34.27 | 25.640 |
| Example 2 | graphite | 18.5 | 1.50 | 5.71 | 34.79 | 26.370 |
| Example 3 | graphite | 18.5 | 1.60 | 4.81 | 34.27 | 25.640 |
| Example 4 | graphite | 17.5 | 1.80 | 3.76 | 29.78 | 24.283 |
| Example 5 | graphite | 17.5 | 1.80 | 3.76 | 29.78 | 24.283 |
| Example 6 | graphite | 16.4 | 1.80 | 5.70 | 21.67 | 26.256 |
| Example 7 | graphite | 16.4 | 1.45 | 6.65 | 45.59 | 24.639 |
| Example 8 | graphite | 14.8 | 1.45 | 3.49 | 41.25 | 20.050 |
| Example 9 | graphite | 14.8 | 1.60 | 2.63 | 34.78 | 19.732 |
| Example 10 | graphite | 14.8 | 1.75 | 2.22 | 26.46 | 20.326 |
| Example 11 | graphite | 13.5 | 1.55 | 3.23 | 33.68 | 19.035 |
| Example 12 | graphite | 13.5 | 1.55 | 2.95 | 42.49 | 18.276 |
| Example 13 | graphite | 13.5 | 1.60 | 3.05 | 32.72 | 18.997 |
| Example 14 | graphite | 13.5 | 1.60 | 3.07 | 32.72 | 19.014 |
| Example 15 | graphite | 7.2 | 1.60 | 0.99 | 36.78 | 10.364 |
| Example 16 | graphite | 6.3 | 1.60 | 0.95 | 38.72 | 9.317 |
| Example 17 | graphite | 10.6 | 1.60 | 2.65 | 33.62 | 15.628 |
| Example 18 | graphite | 10.6 | 1.60 | 2.65 | 32.72 | 15.692 |
| Example 19 | graphite | 10.6 | 1.60 | 2.70 | 32.72 | 15.748 |

(continued)

| | | Negative electrode active material | $Dv_a50(\mu m)$ | $PD_a(g/cm^3)$ | $M_a(m\Omega)$ | Pa (%) | $F_a$ |
|---|---|---|---|---|---|---|---|
| | Example 20 | graphite | 10.6 | 1.60 | 2.61 | 32.72 | 15.650 |
| | Example 21 | graphite | 6.0 | 1.60 | 0.84 | 33.62 | 9.215 |
| | Example 22 | graphite | 6.0 | 1.60 | 0.84 | 33.62 | 9.215 |
| | Example 23 | graphite | 6.0 | 1.60 | 0.84 | 33.62 | 9.215 |
| | Example 24 | graphite | 12.0 | 1.60 | 3.71 | 33.87 | 18.069 |
| | Example 25 | graphite | 6.5 | 1.60 | 0.97 | 32.72 | 9.918 |
| | Example 26 | graphite | 6.5 | 1.60 | 0.97 | 32.72 | 9.918 |
| | Example 27 | graphite | 6.5 | 1.60 | 0.82 | 31.78 | 9.841 |
| | Example 28 | graphite | 6.5 | 1.60 | 0.97 | 32.72 | 9.918 |
| | Example 29 | graphite | 8.5 | 1.60 | 1.33 | 33.62 | 12.205 |
| | Example 30 | graphite | 6.5 | 1.60 | 0.97 | 32.72 | 9.918 |
| Comparative Example 1 | | graphite | 16.5 | 1.70 | 8.53 | 34.27 | 27.514 |
| Comparative Example 2 | | graphite | 4.0 | 1.50 | 0.81 | 42.69 | 6.563 |
| Comparative Example 3 | | graphite | 20.5 | 1.65 | 9.95 | 35.31 | 32.782 |
| Comparative Example 4 | | graphite | 4.5 | 1.50 | 0.87 | 45.78 | 7.011 |

**Table 3**

| | $F_c/F_a$ | Dynamic performance | 1C Number of cycles |
|---|---|---|---|
| Example 1 | 0.427 | Slight lithium precipitation | 1890 |
| Example 2 | 0.420 | Slight lithium precipitation | 1670 |
| Example 3 | 0.371 | Slight lithium precipitation | 1560 |
| Example 4 | 0.509 | Slight lithium precipitation | 2200 |
| Example 5 | 0.507 | No lithium precipitation | 2880 |
| Example 6 | 0.468 | Slight lithium precipitation | 2470 |
| Example 7 | 0.553 | Slight lithium precipitation | 2300 |
| Example 8 | 0.689 | No lithium precipitation | 2150 |
| Example 9 | 0.708 | No lithium precipitation | 2830 |
| Example 10 | 0.704 | No lithium precipitation | 1980 |
| Example 11 | 0.750 | No lithium precipitation | 2820 |
| Example 12 | 0.871 | No lithium precipitation | 2830 |
| Example 13 | 1.102 | No lithium precipitation | 1860 |
| Example 14 | 0.662 | No lithium precipitation | 2040 |
| Example 15 | 1.818 | No lithium precipitation | 2200 |
| Example 16 | 2.017 | No lithium precipitation | 2150 |
| Example 17 | 1.210 | No lithium precipitation | 2200 |
| Example 18 | 1.271 | No lithium precipitation | 2100 |
| Example 19 | 1.259 | No lithium precipitation | 1980 |

(continued)

|  | $F_c/F_a$ | Dynamic performance | 1C Number of cycles |
|---|---|---|---|
| Example 20 | 1.285 | No lithium precipitation | 1890 |
| Example 21 | 2.931 | No lithium precipitation | 1500 |
| Example 22 | 2.721 | No lithium precipitation | 2050 |
| Example 23 | 3.202 | Slight lithium precipitation | 1850 |
| Example 24 | 1.589 | No lithium precipitation | 1580 |
| Example 25 | 1.335 | No lithium precipitation | 1760 |
| Example 26 | 1.382 | No lithium precipitation | 1890 |
| Example 27 | 2.186 | No lithium precipitation | 1470 |
| Example 28 | 1.457 | No lithium precipitation | 1500 |
| Example 29 | 1.367 | No lithium precipitation | 1450 |
| Example 30 | 1.756 | No lithium precipitation | 1300 |
| Comparative Example 1 | 0.246 | Severe lithium precipitation | 650 |
| Comparative Example 2 | 5.056 | Severe lithium precipitation | 480 |
| Comparative Example 3 | 0.230 | Severe lithium precipitation | 570 |
| Comparative Example 4 | 5.230 | Severe lithium precipitation | 450 |

From the comparison among Examples 1-24, and Comparative Examples 1-3, it can be seen that when the lithium ion migration kinetic coefficient $F_c$ of the positive electrode coating and the lithium ion migration kinetic coefficient $F_a$ of the negative electrode coating satisfy: $0.25 \leq F_c/F_a < 5$, the lithium-ion battery has good dynamic performance and cycling performance.

Comparing Example 1 with Example 3, it can be seen that when the lithium ion migration kinetic coefficient $F_c$ of the positive electrode coating and the lithium ion migration kinetic coefficient $F_a$ of the negative electrode coating satisfy: $0.25 \leq F_c/F_a <\_ 5$, controlling the average particle size of the positive electrode active material can further improve the comprehensive performance of the lithium-ion battery.

Comparing Example 4 with Example 5, it can be seen that when the lithium ion migration kinetic coefficient $F_c$ of the positive electrode coating and the lithium ion migration kinetic coefficient $F_a$ of the negative electrode coating satisfy: $0.25 \leq F_c/F_a \leq 5$, further modification of the positive electrode active material can further improve the comprehensive performance of the lithium-ion battery.

Comparing Example 21, Example 22, and Example 23, it can be seen that when the lithium ion migration kinetic coefficient $F_c$ of the positive electrode coating and the lithium ion migration kinetic coefficient $F_a$ of the negative electrode coating satisfy: $0.25 \leq F_c/F_a \leq 5$, and the compaction density of the positive electrode coating is in a range from $3.0 g/cm^3$ to $3.8 g/cm^3$, the comprehensive performance of the lithium-ion battery can be further improved.

The embodiment of the present application also provides an electrical device, including a lithium-ion battery in the aforementioned embodiments.

Obviously, the above embodiments are only provided as examples for the purpose of clarifying, rather than limiting the embodiments. For ordinary technical personnel in this field, different forms of changes or modifications can be made based on the above explanations. There is no need and cannot be an exhaustive list of all implementations here. The obvious changes or variations arising from this are still within the scope of protection of the present invention.

**Claims**

1. A lithium-ion battery, comprising a positive electrode plate and a negative electrode plate, the positive electrode plate comprises a positive current collector and a positive electrode coating arranged on at least one surface of the positive current collector, and the negative electrode plate comprises a negative current collector and a negative electrode coating arranged on at least one surface of the negative current collector, wherein a lithium ion migration kinetic coefficient $F_c$ of the positive electrode coating and a lithium ion migration kinetic coefficient $F_a$ of the negative electrode coating satisfy: $0.25 \leq F_c/F_a \leq 5$;

$F_c=2(Dv_c50+5M_c)+PD_c/4P_c$, where $Dv_c50$ μm is an average particle size of a positive electrode active material in the positive electrode coating; $M_c$ Q is an internal resistance of the positive electrode plate; $PD_c$ g/cm³ is a compaction density of the positive electrode coating; $P_c$ is a porosity of the positive electrode coating; $F_a=Dv_a50+M_a+PD_a/2P_a$, where $Dv_a50$ μm is an average particle size of a negative electrode active material in the negative electrode coating; $M_a$ mΩ is an internal resistance of the negative electrode plate; $PD_a$ g/cm³ is a compaction density of the negative electrode coating; $P_a$ is a porosity of the negative electrode coating.

2. The lithium-ion battery of claim 1, wherein the lithium ion migration kinetic coefficient $F_c$ of the positive electrode coating and the lithium ion migration kinetic coefficient $F_a$ of the negative electrode coating satisfy: $0.25 \leq F_c/F_a \leq 2.8$.

3. The lithium-ion battery of claim 1, wherein the lithium ion migration kinetic coefficient $F_c$ of the positive electrode coating is in a range from 6 to 33, and the lithium ion migration kinetic coefficient $F_a$ of the negative electrode coating is in a range from 7 to 40.

4. The lithium-ion battery of claim 3, wherein the lithium ion migration kinetic coefficient $F_c$ of the positive electrode coating is in a range from 8 to 22, and the lithium ion migration kinetic coefficient $F_a$ of the negative electrode coating is in a range from 10 to 28.

5. The lithium-ion battery of any one of claims 1 to 4, wherein the average particle size of the positive electrode active material is in a range from 2 μm to 8 μm, the internal resistance of the positive electrode plate is in a range from 0.05 Q to 1.6 Q, the compaction density of the positive electrode coating is in a range from 3.0g/cm³ to 3.8g/cm³, and the porosity of the positive electrode coating is in a range from 20% to 50%; and
the average particle size of the negative electrode active materials is in a range from 6μm to 20μm, the internal resistance of the negative electrode plate is in a range from 0.8mΩ to15mΩ, the compaction density of the negative electrode coating is in a range from 1.4g/cm³ to 1.8g/cm³, and the porosity of the negative electrode coating is in a range from 20% to 60%.

6. The lithium-ion battery of claim 5, wherein the average particle size of the positive electrode active material is in a range from 2.53μm to 7.56μm, the internal resistance of the positive electrode plate is in a range from 0.05Ω to 0.9Ω, the compaction density of the positive electrode coating is in a range from 3.1g/cm³ to 3.6g/cm³, and the porosity of the positive electrode coating is in a range from 20% to 40%; and
the average particle size of the negative electrode active materials is in a range from 8μm to 18μm, the internal resistance of the negative electrode plate is in a range from 0.8mΩ to 10mΩ, the compaction density of the negative electrode coating is in a range from 1.4g/cm³ to 1.7g/cm³, and the porosity of the negative electrode coating is in a range from 35% to 55%.

7. The lithium-ion battery of any one of claims 1 to 4, wherein at least some of the positive electrode active materials are single crystal particles.

8. The lithium-ion battery of any one of claims 1 to 4, wherein the positive electrode active material comprises a modified positive electrode active material.

9. The lithium-ion battery of claim 8, wherein the modified positive electrode active material comprises a doping element, and the doping element comprises at least one of Al, Zr, Sr, Ti, B, Mg, V, Ba, W, Y and Nb.

10. The lithium-ion battery of claim 8, wherein the modified positive electrode active material comprises a coating agent, and constituent elements of the coating agent comprise at least one of Li, Al, Ti, Mn, Zr, Mg, Zn, Ba, Mo, B, Wand Co.

11. The lithium-ion battery of claim 10, wherein the coating agent comprises metal oxides and/or inorganic salts, wherein the metal oxide comprises an oxide formed from at least one of Al, Ti, Mn, Zr, Mg, Zn, Ba, Mo, B, W and Co, and the inorganic salt comprises at least one of $Li_2ZrO_3$, $LiNbO_3$, $Li_4Ti_5O_{12}$, $Li_2TiO_3$, $LiTiO_2$, $Li_3VO_4$, $LiSnO_3$, $Li_2SiO_3$, $LiAlO_2$, $AlPO_4$ and $AlF_3$.

12. An electrical device, comprising the lithium-ion battery of any one of claims 1 to 11.

## INTERNATIONAL SEARCH REPORT

| International application No. |
|---|
| **PCT/CN2023/115022** |

**A. CLASSIFICATION OF SUBJECT MATTER**

H01M4/04(2006.01)i; H01M4/13(2010.01)i; H01M4/36(2006.01)i; H01M4/62(2006.01)i; H01M10/0525(2010.01)i; H01M10/42(2006.01)i

According to International Patent Classification (IPC) or to both national classification and IPC

**B. FIELDS SEARCHED**

Minimum documentation searched (classification system followed by classification symbols)

IPC: H01M4/-, H01M10/-

Documentation searched other than minimum documentation to the extent that such documents are included in the fields searched

Electronic data base consulted during the international search (name of data base and, where practicable, search terms used)

CNTXT, VCN, DWPI, CNKI: 锂离子电池, 正极, 负极, 集流体, 涂层, 活性物质, 平均粒径, 内阻, 压实密度, 孔隙率, 迁移动力学系数, 脱出速度, 嵌入速度, 平衡, Li-ion battery, lithium ion battery, positive electrode, negative electrode, current collector, coating, active material, average particle size, internal resistance, compaction density, porosity, migration kinetic coefficient, transfer kinetic coefficient, extraction rate, insertion rate, balanced

**C. DOCUMENTS CONSIDERED TO BE RELEVANT**

| Category* | Citation of document, with indication, where appropriate, of the relevant passages | Relevant to claim No. |
|---|---|---|
| PX | CN 115799441 A (SUNWODA ELECTRIC VEHICLE BATTERY CO., LTD.) 14 March 2023 (2023-03-14)<br>claims 1-12 | 1-12 |
| A | CN 109713237 A (NINGDE CONTEMPORARY AMPEREX TECHNOLOGY CO., LTD.) 03 May 2019 (2019-05-03)<br>claims 1-10 | 1-12 |
| A | CN 114583240 A (SHENZHEN CAPCHEM TECHNOLOGY CO., LTD.) 03 June 2022 (2022-06-03)<br>claims 1-10 | 1-12 |
| A | US 2021210749 A1 (CONTEMPORARY AMPEREX TECHNOLOGY CO., LTD.) 08 July 2021 (2021-07-08)<br>claims 1-20 | 1-12 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **06 November 2023** | **13 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/115022**

**C.    DOCUMENTS CONSIDERED TO BE RELEVANT**

| Category* | Citation of document, with indication, where appropriate, of the relevant passages | Relevant to claim No. |
|-----------|-----------------------------------------------------------------------------------|-----------------------|
| A | WO 2022206196 A1 (NINGDE AMPEREX TECHNOLOGY LTD.) 06 October 2022 (2022-10-06)<br>claims 1-10 | 1-12 |

Form PCT/ISA/210 (second sheet) (July 2022)

**INTERNATIONAL SEARCH REPORT**
Information on patent family members

International application No.

**PCT/CN2023/115022**

| Patent document cited in search report | | | Publication date (day/month/year) | Patent family member(s) | | | Publication date (day/month/year) |
|---|---|---|---|---|---|---|---|
| CN | 115799441 | A | 14 March 2023 | None | | | |
| CN | 109713237 | A | 03 May 2019 | None | | | |
| CN | 114583240 | A | 03 June 2022 | None | | | |
| US | 2021210749 | A1 | 08 July 2021 | None | | | |
| WO | 2022206196 | A1 | 06 October 2022 | JP | 2023524613 | A | 13 June 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310093288
- GB 190772016 T
- GB 2165022008 T